# EUROPÄISCHE PATENTSCHRIFT

(11) **EP 3 007 826 B1**
(45) Veröffentlichungstag und Bekanntmachung des Hinweises auf die Patenterteilung: **14.04.2021**
(21) Anmeldenummer: 14729886.3
(22) Anmeldetag: 06.06.2014
(51) Int. Cl.: B01L 9/04, G01G 23/00

(54) **LABOR-STATIV MIT AUFSTELLFÜSSEN FÜR WAAGE**
LABORATORY STAND WITH LEGS FOR WEIGHING
STATIF DE LABORATOIRE AVEC PIEDS POUR UNE BALANCE

(30) Priorität: 15.06.2013 DE 102013010203
(43) Veröffentlichungstag der Anmeldung: 20.04.2016
(73) Patentinhaber: IKA - Werke GmbH & Co. KG, 79219 Staufen (DE)
(72) Erfinder: EBLE, Erhard, 79189 Bad Krozingen (DE); ZELLER, Andreas, 79189 Bad Krozingen (DE)
(74) Vertreter: Maucher Jenkins Patent- und Rechtsanwälte
(86) Internationale Anmeldenummer: PCT/EP2014/061835
(87) Internationale Veröffentlichungsnummer: WO 2014/198664

(56) Entgegenhaltungen:
- EP-A1- 1 959 244
- EP-A1- 2 060 885
- WO-A1-2009/156020
- WO-A1-2009/156023
- DE-A1- 19 712 313
- FR-A1- 2 846 632

## Beschreibung

Die Erfindung betrifft ein Labor-Stativ - im Folgenden auch nur "Stativ" genannt - mit wenigstens einer aufwärts gerichteten Haltestange - in aller Regel einer vertikalen Haltestange - und mit einer diese Haltestange tragenden Bodenabstützung sowie mit einer Aufnahme für wenigstens ein Gefäß oder Laborgefäß, wobei die Bodenabstützung die Aufnahme für das Gefäß aufweist und wobei an der Haltestange zumindest eine Halterung für ein Misch- und/oder Rühr- und/oder Dispergier- und/oder Temperier- und/oder Messgerät insbesondere lösbar und/oder höhenverstellbar anbringbar oder vorgesehen ist. Dabei ist als derartige Halterung auch eine solche gemeint, die selbst mittelbar oder unmittelbar mit dem entsprechenden Gerät verbunden ist oder aber eine solche, mit der ein solches Gerät festgelegt werden kann.

Derartige Stative sind vor allem in Laboratorien vielfältig im Einsatz und erlauben es, nahezu beliebige Gefäße auf den zugehörigen Aufnahmen aufzustellen und durch in der Regel von oben in diese Gefäße eingreifende unterschiedliche Geräte in diesen Gefäßen befindliche Medien zu bearbeiten oder zu untersuchen oder zu behandeln oder Messungen daran vorzunehmen.

Ein Benutzer eines derartigen Stativs mit Gefäß muss bei der Bearbeitung des Inhalts des Gefäßes diesen richtig dosieren, was vor allem dann einen ziemlich großen Aufwand bedeuten kann, wenn der Inhalt aus mehreren verschiedenen Stoffen oder Medien bestehen können soll.

Erfordert eine derartige Dosierung zum Beispiel beim Einfüllen von einzelnen oder mehreren Stoffen in das Gefäß eine allmähliche Hinzufügung oder Dosierung von Bestandteilen, muss das hinzugefügte Material immer wieder neu abgewogen oder dosiert und nachgefüllt werden, wofür in Laboratorien, in denen gattungsgemäße Stative zum Einsatz kommen, zahlreiche unterschiedliche Waagen für die unterschiedlichsten Zwecke zur Verfügung stehen. Bei bestimmten Bearbeitungen kann außerdem das Nachfüllen während der schon laufenden Bearbeitung oder Messung erforderlich werden, zum Beispiel, wenn Verdunstungsvorgänge auftreten.

Aus der Druckschrift WO 2009/156023 A1 ist ein Laborreaktor vorbekannt, der unter anderem ein Reaktionsgefäß zur Aufnahme von zu bearbeitenden und/oder zu mischenden und/oder miteinander reagierenden Stoffen sowie eine Halterung für das Reaktionsgefäß umfasst. Die Halterung weist eine einer Aufstellfläche zugewandte Unterseite auf, an der mehrere Aufstellfüße in Gebrauchsstellung aufwärts oder in vertikaler Richtung gegen eine Rückstell- oder Federkraft nachgiebig oder verstellbar oder beweglich gelagert und mit einer Wiegeeinrichtung versehen oder verbunden oder in Wirkverbindung sind.

Aus der Druckschrift WO 2009/156020 A1 ist ein Magnetrührer vorbekannt, der mehrere Aufstellfüße aufweist, die in Gebrauchsstellung aufwärts oder in vertikaler Richtung gegen eine Rückstell- oder Federkraft nachgiebig oder verstellbar oder beweglich gelagert und mit der Wiegeeinrichtung versehen oder verbunden oder in Wirkverbindung sind. Sowohl bei dem Laborreaktor als auch bei dem Magnetrührer ist dabei vorgesehen, dass die Aufstellfüße, mit denen der Laborreaktor bzw. der Magnetrührer eine Aufstellfläche kontaktieren zur Gewichtsbestimmung beweglich oder verstellbar gelagert und mit einer Wiegeeinrichtung verbunden sind.

Aus der Druckschrift DE 197 12 313 A1 ist ferner ein Wägesystem vorbekannt, das eine Waage mit einer Waagschale oder Lastaufnahmevorrichtung umfasst, in, an und/oder auf der sich ein oder mehrere Sensoren zur Messung physikalischer Größen befinden.
Es besteht deshalb die Aufgabe, ein Stativ der eingangs definierten Art zu schaffen, mit welchem die Effektivität der Bearbeitung von in Gefäßen befindlichen Medien gesteigert oder beschleunigt oder vereinfacht werden kann.

Diese Aufgabe wird mit den Mitteln und Merkmalen des Patentanspruchs 1 gelöst. Ausgestaltungen und Weiterbildungen sind in den abhängigen Ansprüchen enthalten.

Vor allem ist das eingangs definierte Labor-Stativ dadurch gekennzeichnet, dass die an der Bodenabstützung vorgesehene Aufnahme eine das Gefäß in Gebrauchsstellung aufnehmende, haltende und/oder unterstützende Aufstellfläche ausbildet und dass an der der Aufstellfläche abgewandten Unterseite der Aufnahme Abstützvorsprünge vorgesehen oder angeordnet sind, die quer zu der Aufstellfläche und ihrer Unterseite oder in vertikaler Richtung gegen eine Rückstell- oder Federkraft nachgiebig oder verstellbar oder beweglich gelagert und mit einer Wiegeeinrichtung versehen oder verbunden oder in Wirkverbindung sind.

Eine einfache erfindungsgemäße Lösung kann also beispielsweise ein übliches Labor-Stativ mit einer exzentrisch oder seitlich zur Aufstellfläche angeordneten Haltestange vorsehen, auf welcher ein Gefäß mit dem zu bearbeitenden Inhalt gehalten oder aufgestellt werden kann. Durch die besonderen Abstützvorsprünge und deren Zusammenwirken mit einer Wiegeeinrichtung ist es dabei auf einfache Weise möglich, die Füllung eines Gefäßes und dabei die Dosierung des einzufüllenden Mediums oder von Bestandteilen davon durchzuführen, ohne dazu eine separate Waage zu benötigen. Vielmehr kann sich das Gefäß beim Füllen und beim Wiegen der Füllung bereits in Gebrauchsstellung befinden.

Ferner ist es auf einfache Weise möglich, durch eine Bearbeitung des Gefäß-Inhalts auftretende Gewichtsänderungen schon während dieser Bearbeitung zu erkennen und zu erfassen, beispielsweise anzuzeigen und eine Reaktion darauf zu ermöglichen. Insbesondere kann ein Medium oder eine Mischung von Medien oder Bestandteilen sehr genau dosiert und nachdosiert werden, ohne eine ein weiteres Instrument oder Gerät darstellende Waage hinzuziehen zu müssen. Durch eine Bearbeitung auftretende Gewichtsänderungen können sofort durch die Wiegeeinrichtung festgestellt und/oder angezeigt werden.

Für möglichst genaue Ergebnisse ist es dabei günstig, wenn alle Abstützvorsprünge des Stativs als unterseitig an der Bodenabstützung angeordnete Abstützvorsprünge ausgebildet und mit der Wiegeeinrichtung in Wirkverbindung sind. Zwar könnten einzelne Abstützvorsprünge auch starr sein, jedoch könnte darunter die Genauigkeit des Wiegevorganges leiden.

Ein Ausführungsbeispiel von ganz erheblicher vorteilhafter Bedeutung und selbstständiger Schutzwürdigkeit kann darin bestehen, dass oberhalb der Unterseite der Bodenabstützung nicht mit der Aufstellfläche des Stativs zusammenwirkende Abstützvorsprünge vorgesehen sind, die mit der Wiegeeinrichtung in Wirkverbindung sind und die die Aufnahme für das Gefäß als Unterstützung oder als an der Unterseite der Aufnahme angeordnete Abstützvorsprünge tragen.

Durch diese Ausgestaltung wird die zu dem Stativ gehörende Wiegeeinrichtung von dem eigentlichen Stativ derart unabhängig, dass nur die Aufnahme für das Gefäß und dieses Gefäß selbst gewogen werden, nicht aber das gesamte Stativ. Die Aufstellplatte mit Gefäß kann also separat und unabhängig von dem Stativ mit Hilfe der erfindungsgemäß vorgesehenen Wiegeeinrichtung gewogen werden, sodass die Wiegevorgänge betreffend den Inhalt des Gefäßes genauer und auch schneller erfolgen können.

Eine zweckmäßige Ausgestaltung dieser Weiterbildung der Erfindung kann dabei vorsehen, dass oberhalb der Unterseite der Bodenabstützung nach oben gerichtete, zu ihr gehörende Abstützvorsprünge vorgesehen sind, die nach unten oder in vertikaler Richtung abwärts gegen eine Rückstellkraft oder Federkraft nachgiebig oder verstellbar oder beweglich gelagert und mit einer Wiegeeinrichtung versehen oder verbunden oder in Wirkverbindung sind und die - vorzugsweise plattenförmige - Aufnahme für das Gefäß in Gebrauchsstellung von unten her unterstützen und/oder tragen. In einem solchen Falle gehört dann die Wiegeeinrichtung über die Abstützvorsprünge unmittelbar zu dem Labor-Stativ und die ebenfalls zu dem Stativ gehörende plattenförmige Aufnahme kann auf diese Abstützvorsprünge aufgelegt werden, sodass dann ein auf dieser Aufnahme angeordnetes Gefäß und sein Inhalt gewogen werden können.

Eine abgewandelte, vergleichbar vorteilhafte Ausführungsform kann vorsehen, dass die Bodenabstützung zueinander beabstandete Arme aufweist, die in einen an ihr vorgesehenen Zwischenraum ragende und federschwenkbare Haltearme mit in Gebrauchsstellung nach oben weisenden Abstützvorsprüngen tragen und dass auf den Abstützvorsprüngen wenigstens eine - insbesondere plattenförmige - Aufnahme mit einer oberen Aufstellfläche für wenigstens ein Gefäß vorgesehen ist. Es kann also an der Bodenabstützung ein geeigneter Zwischenraum zwischen beabstandeten Armen zunächst frei sein, in welchen Haltearme mit nach oben weisenden Abstützvorsprüngen eingreifen können, sodass darauf die Aufnahme mit dem Gefäß aufgelegt und durch die Verbindung der Abstützvorsprünge mit der Wiegeeinrichtung gewogen werden können.

Eine vergleichbar vorteilhafte Ausführungsform, die an Stelle der vorbeschriebenen oder zusätzlich zu der vorbeschriebenen Anordnung möglich ist, kann vorsehen, dass die Bodenabstützung einen Zwischenraum zwischen zwei - insbesondere parallelen-Armen und an diesen Armen in den Zwischenraum oder dessen Projektion ragende Vorsprünge aufweist, auf welchen in Gebrauchsstellung die die Aufstellfläche aufnehmende oder aufweisende Aufnahme aufgelagert ist, und dass die Aufnahme unterseitig mit den Vorsprüngen in Gebrauchsstellung in Berührkontakt befindliche Abstützvorgänge aufweist, die aufwärts oder in vertikaler Richtung gegen eine Rückstell- oder Federkraft an der Aufnahme nachgiebig oder verstellbar oder beweglich gelagert und mit der Wiegeeinrichtung versehen oder verbunden oder in Wirkverbindung sind. Bei einer solchen Anordnung ist das Labor-Stativ selbst von der Wiegeeinrichtung vollständig unabhängig, wird also nicht nur nicht mitgewogen, sondern kann gegebenenfalls ein schon existierendes Labor-Stativ sein, sofern es entsprechende zu seiner Bodenabstützung gehörende insbesondere parallele Arme aufweist, in deren Zwischenraum Platz für das Auflagern der mit einer Wiegeeinrichtung in Wirkverbindung befindlichen Abstützvorsprüngen der Aufnahme hat.

Es sei noch erwähnt, dass die unterseitig an der Aufnahme vorgesehenen, mit einer Wiegeeinrichtung versehenen oder verbundenen oder in Wirkverbindung befindlichen Abstützvorsprünge auch auf der Bodenabstützung selbst oder auf den diese Bodenabstützung bildenden parallelen Armen aufgelagert werden kann, um eine Labor-Stativ-Anordnung zu schaffen, die das Gefäß mit seinem Inhalt auch wiegen kann, ohne es von dem Stativ entfernen und auf eine separate Waage stellen zu müssen.

Dadurch, dass die an der Unterseite der Aufnahme befindlichen, mit einer Wiegeeinrichtung verbundenen Abstützvorsprünge bei einer Ausgestaltung der Erfindung auf die Bodenabstützung selbst oder auf die diese bildenden Arme passen und darauf aufstellbar sind, kann der Anwendungsbereich noch weiter vergrößert werden, da auch schon existierende Laborstative dann zusammen mit einer derartigen Aufnahme mit an ihr befindlichen Abstützvorsprüngen als erfindungsgemäße Labor-Stativ-Anordnung benutzt werden können, was auch die Gesamt-Herstellung begünstigt.

Eine weitere Ausführungsform, die alternativ oder zusätzlich vorgesehen sein kann, kann darin bestehen, dass die Bodenabstützung selbst die Aufstellfläche der Aufnahme aufweist oder bildet oder trägt. Bei einer solchen Anordnung ergibt sich ein kompaktes Gerät, bei welchem keine separat bewegbare Aufnahme mit dem eigentlichen Stativ zusammengesetzt oder zusammengebracht werden muss.

Eine abgewandelte Ausführungsform der Erfindung kann vorsehen, dass die an der Bodenabstützung vorgesehene Aufnahme für das Gefäß eine durchgängige Aufstellfläche bildet, welche plattenförmig ausgebildet ist und unterseitig die nachgiebigen Abstützvorsprünge sowie an der Oberseite die Aufstellfläche aufweist, oder dass die Bodenabstützung von einem Zwischenraum zwischen sich aufnehmenden Armen gebildet ist, und zu dem Labor-Stativ ein Gefäß gehört, dessen Bodenfläche zumindest in einer Richtung eine größere Abmessung hat, als es dem inneren Abstand der Arme entspricht, wobei die Haltestange vorzugsweise exzentrisch zu der Bodenabstützung und/oder zu der GefäßAufnahme angeordnet ist.

Eine derartige Ausführungsform sieht also ein im Wesentlichen übliches Labor-Stativ mit einer exzentrisch oder seitlich zur Aufstellfläche angeordneten Haltestange vor, auf welcher in üblicherweise ein zugehöriges Gefäß mit einem zu bearbeitenden Gut oder Inhalt gehalten werden kann. Durch die besonderen als Aufstellfüße nutzbaren Abstützvorsprünge und deren Zusammenwirken mit einer Wiegeeinrichtung ist es auf einfache Weise möglich, die Füllung eines Gefäßes und dabei die Dosierung des einzufüllenden Mediums durchzuführen, ohne dazu eine spezielle Waage zu benötigen. Vielmehr kann sich das Gefäß bei seiner Füllung bereits in Gebrauchsstellung befinden.

Ferner ist es auch bei einem derartigen Ausführungsbeispiel und bei einer derartigen Anordnung auf einfache Weise möglich, durch die Bearbeitung des Mediums auftretende Gewichtsveränderungen während der Bearbeitung zu erkennen und zu erfassen, zweckmäßigerweise anzuzeigen und eine Reaktion darauf zu ermöglichen. Insbesondere kann ein Medium oder eine Mischung von Medien sehr genau dosiert und/oder nachdosiert werden. Durch eine Bearbeitung auftretende Gewichtsänderungen können praktisch sofort durch die zu dem Labor-Stativ erfindungsgemäß gehörende Wiegeeinrichtung festgestellt und/oder angezeigt werden.

Besonders günstig ist es, wenn ein Teil der beweglichen Lagerung des/der Abstützvorsprünge mit der Wiegeeinrichtung in Wirkverbindung ist. Dies stellt eine konstruktiv einfache Möglichkeit dar, die Beweglichkeit der Abstützvorsprünge in einer Wäge- oder Wiegeeinrichtung wirksam zu machen.

Bei einer abgewandelten Ausführungsform können der oder die Abstützvorsprünge wenigstens teilweise aus federelastisch nachgiebigem Werkstoff bestehen und mit einem mit der Wiegeeinrichtung verbundenen, durch die Nachgiebigkeit des oder der Abstützvorsprünge bewegbaren Übertragungselement zu der Wiegeeinrichtung versehen sein.

Im Hinblick auf übliche oder gängige Labor-Stative mit mehreren einzelnen Abstützvorsprünge ist die erfinderische Ausgestaltung zweckmäßig, weil die einzelnen Abstützvorsprünge jeweils mit der oder einer Wiegemesseinrichtung beispielweise über entsprechende Sensoren zusammenwirken, sodass auch bestehende Bauformen von Stativen weitgehen unverändert bleiben können, aber die entsprechend beweglichen oder nachnachgiebigen Abstützvorsprünge mit Wiegefunktion erhalten können.
Erfindungsgemäß ist vorgesehen, dass die nachgiebigen oder verstellbaren oder beweglichen Abstützvorsprünge Hebel oder Wippen oder Endstücke beaufschlagen, die mit der Wiegeeinrichtung zusammenwirken oder in Wirkverbindung oder verbunden sind oder gegebenenfalls eine Wiegeeinrichtung aufweisen.

Die durch die Abstützvorsprünge bewegbaren Hebel oder Wippen oder Endstücke können mit Kraftmesssensoren oder Messstreifen oder Piezoelementen als Bestandteile einer Wiegeeinrichtung versehen sein. Dadurch kann auf engstem Raum eine entsprechende Wiegefunktion verwirklicht werden.

Zweckmäßig ist es, wenn die Kraftmesssensoren mehrerer oder aller Abstützvorsprünge mit einem Mikroprozessor oder Rechner in der Weise kombiniert sind, dass die an den einzelnen Abstützvorsprünge aufgenommenen Gewichtskräfte addiert und/oder gemittelt werden. Somit erhält der Benutzer von vorneherein jeweils eine Gewichtsangabe beziehungsweise ein Gesamtgewicht oder dessen Änderung kann in geeigneter Weise angezeigt oder einem Steuergerät zugeführt werden, welches auf eine Gewichtsänderung reagieren kann.

Eine Ausgestaltung des erfindungsgemäßen Stativs kann vorsehen, dass es einen elektronischen Speicher für Rezepturen aufweist, in welchem stoffmäßig und gewichtsmäßig definierte Einzelbestandteile von Mischungen hinterlegt sind und durch die integrierte Wiegefunktion menügeführt abarbeitbar sind. Somit können immer wiederkehrende Bearbeitungs- oder Mischvorgänge erheblich rationalisiert und beschleunigt werden.

Eine zweckmäßige Ausführungsform des erfindungsgemäßen Stativs kann darin bestehen, dass die Bodenabstützung gleichzeitig als Aufnahme für das Gefäß ausgebildet ist oder dient und auf der den Abstützvorsprüngen abgewandten Oberseite eine Aufstellfläche für das Gefäß aufweist. Somit erhält die Bodenabstützung in üblicher Weise eine Doppelfunktion.

Besonders günstig ist es dabei, wenn die an der Bodenabstützung vorgesehene Aufnahme für das Gefäß eine durchgängige Aufstellfläche bildet, so dass auch Gefäße unterschiedlicher Abmessungen problemlos aufgenommen werden können, während bei einer gabelförmigen Abstützung das Gefäß über die beiden Gabelzinken reichen muss.

Die Bodenabstützung kann als Platte ausgebildet sein, welche unterseitig die Abstützvorsprünge und an der Oberseite die Aufstellfläche für das Gefäß aufweist. Dies ergibt eine sehr einfache Bauform, bei welcher die Wiegeeinrichtung oder dazu gehörige Sensoren in Vertiefungen der Platte oder in geeigneter Weise an der Platte angeordnet sein können. Bevorzugt ist die Platte auch aus Stabilitätsgründen so dick bemessen, dass die Abstützvorsprünge und die von ihnen beaufschlagten Sensoren in Aussparungen der Platte zweckmäßigerweise unterseitig angeordnet sein können.

Die mit der Wiegefunktion versehenen oder verbundenen Abstützvorsprünge können auf oder an Rollen angeordnet sein, wodurch das Stativ verfahrbar ist. Dies kann vor allem bei relativ großen Stativen mit entsprechend großen Gefäßen zweckmäßig sein, die durch ihre Füllung ein entsprechend hohes Gewicht erhalten. Dabei kann wenigstens eine der Rolle mit einer Bremse oder lösbaren Sperre versehen sein.

Das erfindungsgemäße Stativ mit der erfindungsgemäß vorgesehenen, von den Abstützvorsprüngen beaufschlagten Wiegeeinrichtung kann an der Bodenabstützung oder Gefäß-Aufnahme oder an der Haltestange wenigstens eine Gewichtsanzeige aufweisen. Somit kann der Benutzer die jeweilige Gewichtsänderung beispielsweise beim Füllen des Gefäßes oder auch das Ausgangsgewicht und eine Änderung des Gewichts während der Bearbeitung des Gefäßinhalts beobachten. Zusätzlich kann die Gewichtsänderung über die Zeit zum Beispiel durch einen entsprechenden Speicher aufgezeichnet werden.

Eine zusätzliche oder abgewandelte Ausgestaltung kann vorsehen, dass der/die mit den Abstützvorsprüngen zusammenwirkende Wiegeeinrichtung oder Wiegesensoren zur Weitergabe der Messergebnisse über Funk insbesondere an ein an dem Labor-Stativ angeordnetes Gerät, dessen Antrieb und/oder ein zu ihm gehörendes Display bzw. eine Anzeigevorrichtung ausgebildet ist/sind. Die Messergebnisse insbesondere der Wiegeeinrichtung können auf diese Weise zum Beispiel bei einer Steuerung oder Regelung der den Inhalt des Gefäßes bearbeitenden Geräte insbesondere als Reaktion auf Gewichtsänderungen beeinflussen und/oder Messergebnisse auch mit Abstand zu dem Labor-Stativ anzeigen und deutlich machen, sodass ein Arbeitsplatz mit einem erfindungsgemäßen Labor-Stativ sehr rationell eingerichtet sein kann und der Benutzer sich nicht immer unbedingt unmittelbar im Bereich dieses Stativs aufhalten muss.

Eine zweckmäßige und vorteilhafte Ausgestaltung der Erfindung kann ferner vorsehe, dass die Aufnahme für das Laborgefäß beheizbar ist. Somit kann eine zusätzliche Bearbeitungskomponente für den Inhalt des Gefäßes eine Aufheizung sein, bei der die erfindungsgemäß vorgesehene Wiegefunktion besonders zweckmäßig ist, weil damit Verdunstungsvorgänge verbunden sein können, die möglicherweise eine Nachdosierung während der Behandlung vorteilhaft erscheinen lassen oder sogar erforderlich machen. Dabei kann die Wiegeeinrichtung gegebenenfalls auch bei der Steuerung oder Regelung der Heizvorrichtung nutzbar sein.

Nachstehend sind Ausführungsbeispiele der Erfindung anhand der Zeichnung näher beschrieben. Es zeigt in zum Teil schematisierter Darstellung:

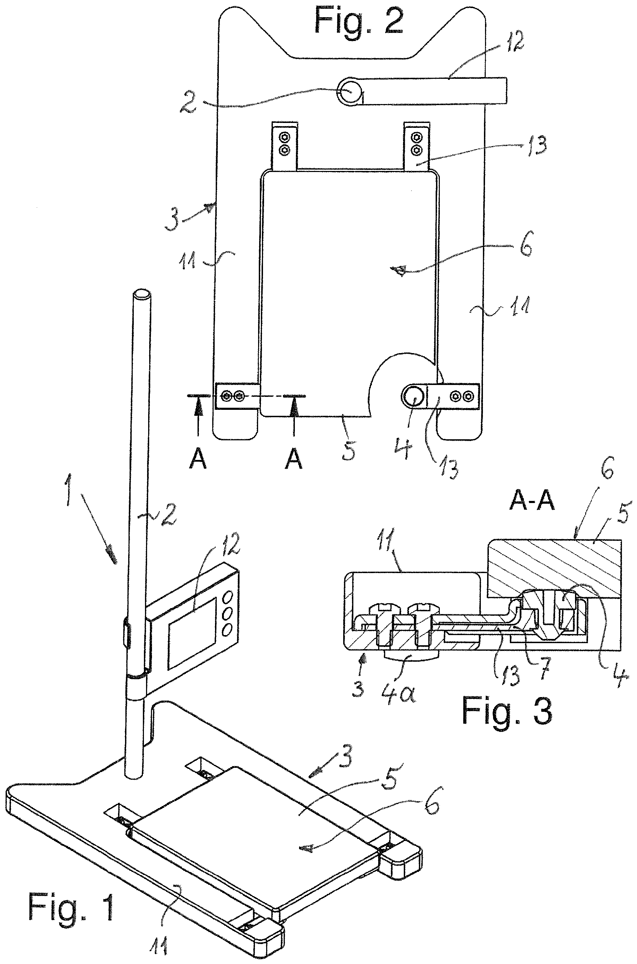

- Fig.1: Eine perspektivische Ansicht eines erfindungsgemäßen Labor-Stativs mit einer exzentrischen, vertikalen oder senkrechten Haltestange und mit einer diese tragenden Bodenabstützung sowie einer als eigenständige Platte ausgebildeten Aufnahme für ein darauf in Gebrauchsstellung aufstellbares Labor-Gefäß, welche Aufnahme zwischen zwei parallele Arme der Bodenabstützung passt, wobei an diesen Armen Vorsprünge mit hochstehenden Abstützvorsprüngen vorgesehen sind, die gegen eine Rückstellkraft nachgiebig oder beweglich gelagert und mit einer Wiegeeinrichtung in nicht näher dargestellter Weise in Wirkverbindung sind und auf die die plattenförmige Aufnahme aufgelagert ist,
- Fig. 2: eine Draufsicht des Labor-Stativs gemäß Fig. 1 mit Blick von oben auf die zwischen den parallelen Armen der Bodenabstützung angeordnete Gefäß-Aufnahme, wobei ein Ausschnitt in dieser Aufnahme den Blick auf einen nach oben gerichteten Abstützvorsprung freigibt,
- Fig. 3: einen vergrößerten Längsschnitt gemäß der Schnittlinie A-A in Fig. 2 durch einen Abstützvorsprung und den ihn haltenden bewegbaren Hebel, der in nicht näher dargestellter Weise mit der Wiegeeinrichtung zusammenwirken oder in Wirkverbindung oder verbunden sein kann,
- Fig. 4: eine der Fig. 1 entsprechende Darstellung eines abgewandelten Ausführungsbeispiels, bei welchem die Gefäßaufnahme wiederum zwischen zwei parallelen Armen der Bodenabstützung angeordnet ist und auf in den Zwischenraum zwischen diesen Armen ragenden Vorsprüngen ruht,
- Fig. 5: eine im Schnitt gehaltene Draufsicht des Ausführungsbeispiels gemäß Fig. 4, wobei durch den Teilschnitt der Blick auf in dem Zwischenraum zwischen den Armen ragenden Vorsprünge freigegeben ist,
- Fig. 6: in vergrößertem Maßstab einen Schnitt durch die Anordnung eines Abstützvorsprunges und des ihn haltenden Hebels gemäß der Schnittlinie B-B in Fig. 5,
- Fig. 7: eine den Fig. 1 und 4 entsprechende perspektivische Ansicht eines weiteren abgewandelten erfindungsgemäßen Labor-Stativs mit einer exzentrischen vertikalen oder senkrechten Haltestange und einer diese Haltestange tragenden, als durchgängige Aufstellplatte für das Gefäß ausgebildeten Bodenabstützung, welche unterseitig mit einer Wiegeeinrichtung zusammenwirkende Abstützvorsprünge als Aufstellfüße aufweist,
- Fig. 8: eine Ansicht der Unterseite der Bodenabstützung des in Fig. 7 dargestellten Stativs mit Blick auf die als Aufstellfüße ausgebildeten Abstützvorsprünge in den vier Ecken der Bodenabstützung,
- Fig. 9: einen vergrößerten Längsschnitt durch die Bodenabstützung im Bereich eines Abstützvorsprunges und des ihn haltenden zur Verbindung mit einer Wiegeeinrichtung dienenden Hebels gemäß der Schnittlinie C-C in Fig. 8,

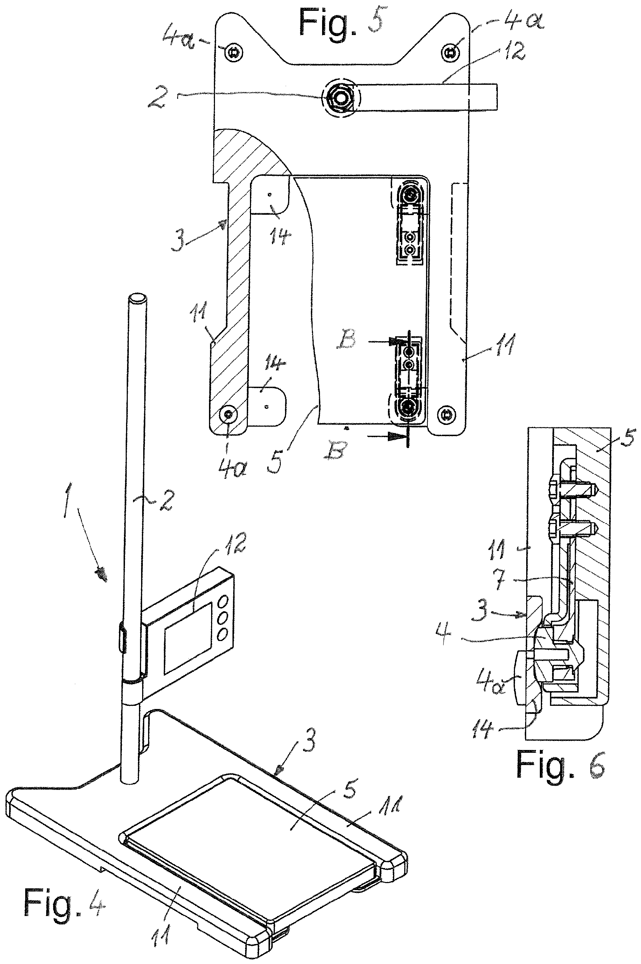

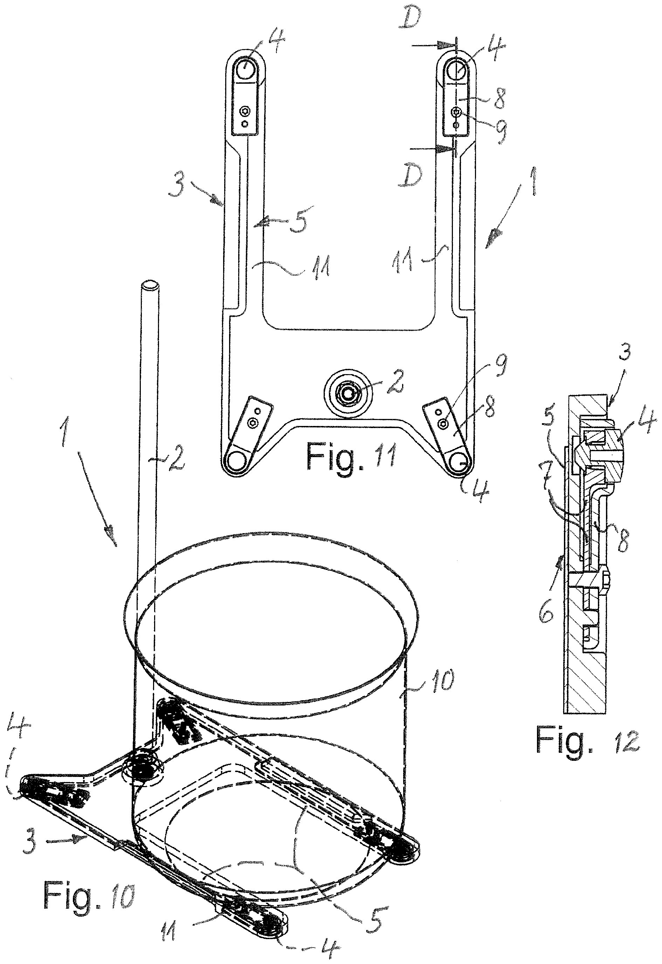

- Fig. 10: eine perspektivische Ansicht eines wiederum abgewandelten Ausführungsbeispiels eines erfindungsgemäßen Labor-Stativs mit einer exzentrischen Haltestange und mit einer diese Haltestange tragenden Bodenabstützung, welche analog den Figuren 1 und 4 von zwei einen Abstand oder Zwischenraum zwischen sich aufweisenden Armen gebildet ist, mit einem auf dieser Bodenabstützung unmittelbar aufgelagerten Gefäß, dessen seitliche Abmessung oder dessen Durchmesser größer als der Abstand oder Zwischenraum der Arme ist, sodass das Gefäß auf diesen steht, wobei wiederum unterseitig als Aufstellfüße dienende Abstützvorsprünge vorgesehen sind,
- Fig. 11: eine Ansicht der Unterseite der Bodenabstützung des in Fig. 10 dargestellten Labor-Stativs sowie
- Fig. 12: einen vergrößerten Längsschnitt durch eine Bodenabstützung mit Abstützvorsprung und federndem Hebel gemäß der Schnittlinie D-D, in Fig. 11.

Bei der nachfolgenden Beschreibung mehrerer Ausführungsbeispiele erhalten hinsichtlich ihrer Funktion übereinstimmende Teile auch bei abgewandelter Gestaltung übereinstimmende Bezugszahlen.

Ein im Ganzen mit 1 bezeichnetes Labor-Stativ, im Folgenden auch kurz "Stativ 1" genannt, weist in allen Ausführungsbeispielen eine aufwärts gerichtete, vertikale Haltestange 2 und eine diese Haltestange 2 tragende, im Ganzen mit 3 bezeichnete Bodenabstützung auf, welche unterseitig zu einer Aufstellfläche, auf welcher das Stativ 1 stehen kann, hin gerichtete Abstützvorsprünge 4 aufweist, wobei bei einzelnen Ausführungsbeispielen in noch zu beschreibender Weise Abstützvorsprünge 4 eine zusätzliche Funktion im Zusammenhang mit einer Wiegeeinrichtung, also zwei Funktionen, haben, und andere Ausführungsbeispiele Abstützvorsprünge 4a zum Aufstellen und zusätzlich Abstützvorsprünge 4 zum Wiegen haben.

Dieses Stativ 1 hat außerdem eine in den verschiedenen Ausführungsbeispielen unterschiedlich gestaltete Aufnahme 5 für wenigstens ein Gefäß 10 oder Laborgefäß, welches nur in Fig. 10 dargestellt ist und in gleicher Weise in den Ausführungsbeispielen und den Figuren 1, 4 und 7 vorzusehen ist.

Die Haltestange 2 kann in nicht näherdargestellter Weise gegebenenfalls lösbare Halterungen für Misch-, Rühr-, Dispergier- und/oder Temperier- oder Messgeräte oder sonstige Arbeitsgeräte insbesondere lösbar und/oder höhenverstellbar aufweisen, sodass derartige Bearbeitungs- oder Messgeräte an die Höhe des Gefäßes 10 angepasst an der Haltestange 2 befestigt werden können, um den Inhalt des Gefäßes 10 zu beaufschlagen und zu bearbeiten.

In den Figuren 1 und 4 sind an der Haltestange 2 Anzeigevorrichtungen 12 angeordnet, die bei der Benutzung gegebenenfalls ermittelte Gewichtsanzeigen und/oder Temperaturen oder dergleichen anzeigen können.

Allen Ausführungsbeispielen ist gemeinsam, dass die an der Bodenabstützung 3 vorgesehene Aufnahme 5 eine das Gefäß 10 in Gebrauchsstellung aufnehmende, haltende oder unterstützende Aufstellfläche 6 ausbildet bzw. aufweist. Diese Aufstellfläche 6 ist im Wesentlichen eben und so gestaltet, dass die Unterseite oder der Boden des Gefäßes 10 darauf abgestellt werden kann, wobei im Ausführungsbeispiel gemäß den Figuren 10 bis 12 diese Aufstellfläche 6 in noch zu beschreibender Weise unterbrochen sein kann. An der der Aufstellfläche 6 abgewandten Unterseite der Aufnahme 5 sind die schon erwähnten Abstützvorsprünge 4 vorgesehen oder angeordnet, die quer zu der Aufstellfläche 6 und ihrer Unterseite in vertikaler Richtung gegen eine Rückstell- oder Federkraft nachgiebig oder verstellbar oder beweglich gelagert und mit einer nicht näher dargestellten Wiegeeinrichtung versehen oder verbunden oder in Wirkverbindung sind. Somit können auf der Aufnahme 5 und ihrer Aufstellfläche 6 abgestellte Gefäße 10 und insbesondere deren Inhalt gewogen werden.

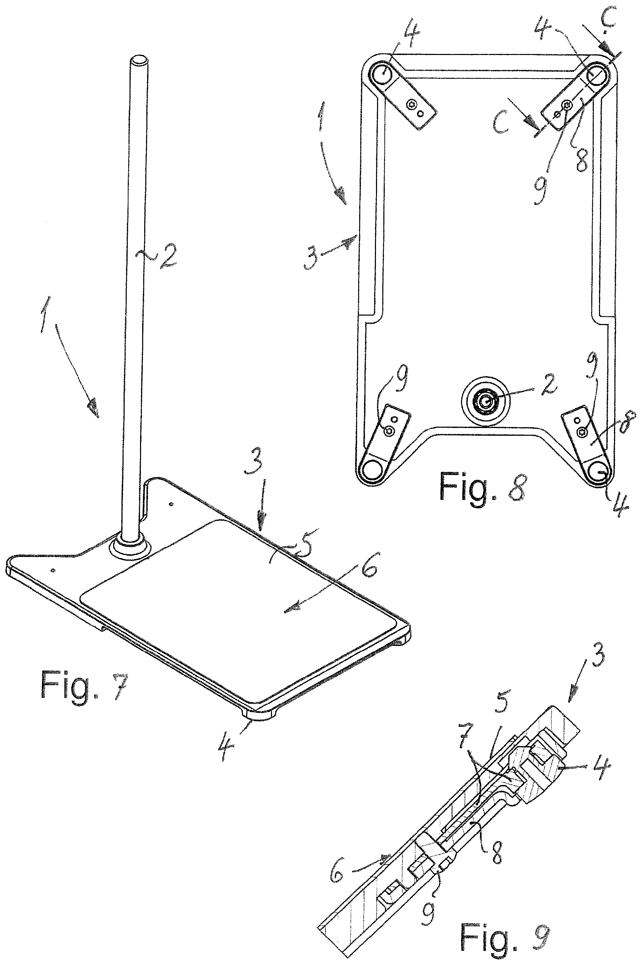

In den Ausführungsbeispielen gemäß den Figuren 8 bis 12 sind dabei alle Abstützvorsprünge 4 als unterseitig an der Bodenabstützung 3 angeordnete Abstützvorsprünge 4 zum Aufstellen und Wiegen ausgebildet und mit der Wiegeeinrichtung in Wirkverbindung. Die übrigen Ausführungsbeispiele sind diesbezüglich abgewandelt, wie sich aus der nachfolgenden Beschreibung ergibt.

In den Ausführungsformen gemäß Fig. 1 bis 6 ist vorgesehen, dass oberhalb der Unterseite der Bodenabstützung 3 Abstützvorsprünge 4 vorgesehen sind, die mit der Wiegeeinrichtung in Wirkverbindung sind und die die Aufnahme 5 für das Gefäß 10 (vgl. Fig. 1 bis 3) oder als an der Unterseite der Aufnahme 5 angeordnete und dieser gegenüber nach unten vorstehende Abstützvorsprünge 4 tragen, die wiederum nachgiebig und in Wirkverbindung mit der Wiegeeinrichtung sind. Außerdem sind davon unabhängige Abstützvorsprünge 4a nach unten vorstehend als insbesondere nicht nachgiebige Füße vorgesehen.

Im Einzelnen sieht das Ausführungsbeispiel gemäß den Figuren 1 bis 3 vor, dass oberhalb der Unterseite der Bodenabstützung 3 nach oben gerichtete Abstützvorsprünge 4 vorgesehen sind, die zusätzlich zu den das eigentliche Stativ 1 tragenden, als Füße wirkenden Abstützvorsprüngen 4a vorhanden sind. Diese nach oben gerichteten Abstützvorsprünge 4 sind nach unten oder in vertikaler Richtung abwärts gegen eine Rückstellkraft oder Federkraft nachgiebig oder verstellbar oder beweglich gelagert und in schon erwähnter Weise mit einer nicht näher dargestellten Wiegeeinrichtung versehen oder verbunden oder in Wirkverbindung. Entgegen den Ausführungsbeispielen gemäß Fig. 7 bis 12 tragen diese nach oben gerichteten Abstützvorsprünge 4 die im Wesentlichen plattenförmige Aufnahme 5 für das Gefäß 10 und unterstützen diese in Gebrauchsstellung von unten her. Diese Anordnung weicht also von der gemäß den Figuren 7 bis 12 ab, bei welcher die Bodenabstützung 3 selbst die Aufstellfläche 6 der Aufnahme 5 aufweist oder bildet.

Die Figuren 1 bis 6 zeigen eine Anordnung, bei welcher die Bodenabstützung 3 zueinander beabstandete Arme 11 aufweist, wie es auch im Ausführungsbeispiel gemäß den Figuren 10 bis 12 vorgesehen ist. Während jedoch im Ausführungsbeispiel gemäß den Figuren 10 bis 12 die Oberseite der beiden Arme 11 die durch deren Zwischenraum unterbrochene Aufstellfläche 6 bilden, ist im Ausführungsbeispiel gemäß den Figuren 1 bis 3 vorgesehen, dass die beabstandeten Arme 11 in den an ihnen bzw. zwischen ihnen vorgesehenen Zwischenraum ragende, federnd schwenkbare Haltearme 13 mit den daran angeordneten, nach oben weisenden Abstützvorsprüngen 4 tragen, auf denen die im Ausführungsbeispiel plattenförmige Aufnahme 5 in Gebrauchsstellung aufgelagert ist und die obere Aufstellfläche 6 für das Gefäß 10 aufweist. Vor allem in Fig. 3 erkennt man, dass der nach oben weisende Abstützvorsprung 4 dabei jeweils in eine Vertiefung an der Unterseite der Aufnahme 5 eingreift und dadurch Formschluss herstellt. Dennoch kann die Aufnahme 5 auch leicht abgenommen werden.

In den Figuren 1 und 2 wird dabei deutlich, dass die federnden Arme 13 einerseits nahe dem Ende der Arme 11 zueinander weisen, während sie nahe der Haltestange 2 parallel zueinander und rechtwinklig zu den erst genannten Haltearmen 13 angeordnet sind.

Eine ähnliche, aber hinsichtlich der Anordnung der nachgiebigen und in Wirkverbindung mit einer Wiegeeinrichtung befindlichen Abstützvorsprüngen 4 abgewandelte Ausführungsform ist in den Figuren 4 bis 6 dargestellt. Auch dabei weist die Bodenabstützung 3 einen Zwischenraum zwischen zwei im Ausführungsbeispiel parallelen Armen 11 und an diesen Armen 11 in dem Zwischenraum ragende Vorsprünge 14 auf, die mit den Haltearmen 13 des Ausführungsbeispiels gemäß den Figuren 1 bis 3 vergleichbar sind, aber nur passiv als Auflager dienen, denn auf diesen ist in Gebrauchsstellung die die Aufstellfläche 6 aufnehmende und aufweisende Aufnahme 5 aufgelagert, welche unterseitig mit den Vorsprüngen 14 in Gebrauchsstellung in Berührkontakt befindliche Abstützvorsprünge 4 aufweist, die aufwärts oder in vertikaler Richtung gegen eine Rückstell- oder Federkraft an der Aufnahme 5 nachgiebig oder verstellbar oder beweglich gelagert und mit der Wiegeeinrichtung versehen oder verbunden oder in Wirkverbindung sind.

Während also im Ausführungsbeispiel gemäß den Figuren 1 bis 3 die Abstützvorsprünge 4 als Auflage für die Aufnahme 5 dienen und nach unten nachgeben, sind diese Abstützvorsprünge 4 im Ausführungsbeispiel gemäß den Figuren 4 bis 6 an der Aufnahme 5 selbst unterseitig angeordnet und können relativ zu dieser nach oben nachgeben und dadurch den Wiegevorgang ermöglichen. Dabei erkennt man in Fig. 6, dass in diesem Falle wiederum diese Abstützvorsprünge 4, nunmehr von oben her in eine Vertiefung an den Vorsprüngen 14 formschlüssig eingreifen, um eine Justierung und Positionierung oder Zentrierung ihrer Lage zu bewirken.

Denkbar wäre eine Abwandlung dahingehend, dass die an der Unterseite der Aufnahme 5 und der plattenförmigen Aufstellfläche 6 befindlichen, mit einer Wiegeeinrichtung verbundenen Abstützvorsprünge 4 auf die Bodenabstützung 3 oder die diese bildenden Arme 11 des Stativs 1 unmittelbar passen und darauf aufstellbar sind, also solche Arme 11 ganz vermieden werden oder aber an diesen Armen 11 in einen Zwischenraum ragende Haltearme 13 oder Vorsprünge 14 vermieden werden. Auch bei einer derartigen Ausführungsform, bei welcher die Aufnahme 5 gewissermaßen auf die Aufstellfläche 6 der Fig. 7 aufgestellt wird und an ihrer Unterseite mit einer Wiegeeinrichtung verbundene Abstützvorsprünge 4 aufweist, könnte dazu dienen, bei dem Wiegevorgang das Stativ 1 selbst nicht mit wiegen zu müssen, also den Wiegevorgang von dem Stativ 1 selbst unabhängig zu gestalten.

Allen Ausführungsbeispielen ist gemeinsam, dass die mit der Wiegeeinrichtung verbundenen Abstützvorsprünge 4 wenigstens teilweise aus federelastisch nachgiebigen Werkstoff bestehen oder mit einem mit der Wiegeeinrichtung verbundenen, durch die Nachgiebigkeit bewegbaren Übertragungselement zu der Wiegeeinrichtung versehen sind, wobei diese nachgiebigen oder verstellbaren oder beweglichen Abstützvorsprünge 4 in allen Ausführungsbeispielen bewegbare Hebel 7 oder Wippen oder Endstücke haben oder beaufschlagen, die mit der Wiegeeinrichtung zusammenwirken oder in Wirkverbindung oder verbunden sind. Das heißt, die nachgiebigen Abstützvorsprünge 4 sind über diese Hebel 7 einerseits nachgiebig und andererseits mit der Wiegeeinrichtung verbunden.

Beispielsweise können die durch die Abstützvorsprünge 4 bewegbaren Hebel 7 oder Wippen oder Endstücke mit Kraftmesssensoren oder Messstreifen oder Piezoelementen als Bestandteile einer Wiegeeinrichtung versehen sein.

In nicht näher dargestellter Weise können die Kraftmesssensoren mehrerer oder aller Abstützvorsprünge 4 in allen Ausführungsbeispielen mit einem Mikroprozessor oder Rechner in der Weise kombiniert sein, dass die an den einzelnen Abstützvorsprüngen 4 aufgenommenen Gewichtskräfte addiert und/oder gemittelt werden.

Ferner kann ein elektronischer Speicher für Rezepturen vorgesehen sein, in welchem stoffmäßig und/oder gewichtsmäßig definierte Einzelbestandteile von Mischungen hinterlegt sind und durch die integrierte Wiegefunktion menügeführt abarbeitbar sind.

Es sei noch erwähnt, dass die mit der Wiegefunktion versehenen oder verbundenen Abstützvorsprünge 4a, sofern sie gleichzeitig Aufstellfüße sind, auf oder an Rollen angeordnet sein können, wodurch das Stativ 1 verfahrbar ist.

Wie schon erwähnt, ist in den Ausführungsbeispielen gemäß Fig. 1 bis 6 dargestellt, dass das Stativ 1 an der Haltestange 2 eine Anzeigevorrichtung und insbesondere eine Gewichtsanzeige 12 aufweisen kann. Selbstverständlich kann diese auch bei den Ausführungsbeispielen gemäß Fig. 7 bis 12 vorgesehen sein.

Die mit den Abstützvorsprüngen 4 zusammenwirkende Wiegeeinrichtung oder die Wiegesensoren können zur Weitergabe der Messergebnisse über Funk ausgebildet sein und zwar insbesondere zur Weitergabe dieser Messergebnisse an ein an dem Laborstativ 1 oder dessen Haltestange 2 angeordnetes Gerät wie Rührer, Mischer und so weiter, an dessen Antrieb und/oder an ein zu ihm gehörendes Display 12, was die Ausnutzung der Wiegeergebnisse erleichtert, ohne aufwendige Verdrahtungen zu benötigen.

Schließlich sei noch erwähnt, dass die Aufnahme 5 für das Gefäß 10 beheizbar sein kann, wobei gegebenenfalls die Heizung auch über die Wiegeeinrichtung gesteuert oder geregelt werden könnte oder umgekehrt.

Das Labor-Stativ 1 hat eine Bodenabstützung 3 und Abstützvorsprünge, die selbst Aufstellfüße sein können oder aber zusätzlich zu solchen Aufstellfüßen vorgesehen sind. Ferner gehört zu dem Labor-Stativ 1 eine Haltestange 2 zur Aufnahme von Geräten oder Messvorrichtungen 12 zur Behandlung oder Untersuchung von Medien oder Stoffen oder Mischungen, die in einem Gefäß 10 enthalten oder eingefüllt sein können, welches in Gebrauchsstellung neben der Haltestange 2 angeordnet ist und in welches entsprechende Geräte oder Messgeräte von oben eingreifen können. Um das Dosieren der Stoffe in dem Gefäß 10 vor oder während der Bearbeitung einfach durchführen zu können und/oder Gewichtsänderungen schnell und zuverlässig erkennen zu können, sind Abstützvorsprünge 4 beweglich gelagert und mit einer Wiegeeinrichtung versehen oder verbunden oder in Wirkverbindung, sodass die sich bei zunehmendem Gewicht verstärkende oder bei abnehmendem Gewicht verringernde Verstellung der Aufstellfüße 4 als Gewichtsänderung feststellen lässt.

## Patentansprüche

1. Labor-Stativ (1) mit einer Wiegeeinrichtung,
mit wenigstens einer aufwärts gerichteten Haltestange (2) und mit einer diese Haltestange (2) tragenden Bodenabstützung (3) sowie mit einer Aufnahme (5) für wenigstens ein Gefäß (10) oder Laborgefäß, wobei die Bodenabstützung (3) die Aufnahme (5) für das Gefäß (10) aufweist und wobei an der Haltestange (2) zumindest eine Halterung für ein Misch- und/oder Rühr- und/oder Dispergier- und/oder Temperier- und/oder Messgerät insbesondere lösbar und/oder höhenverstellbar anbringbar oder vorgesehen ist, wobei die an der Bodenabstützung (3) vorgesehene Aufnahme (5) eine das Gefäß (10) in Gebrauchsstellung aufnehmende, haltende und/oder unterstützende Aufstellfläche (6) ausbildet und wobei an der der Aufstellfläche (6) abgewandten Unterseite der Aufnahme (5) Abstützvorsprünge (4) vorgesehen oder angeordnet sind, die quer zu der Aufstellfläche (6) und ihrer Unterseite oder in vertikaler Richtung gegen eine Rückstell- oder Federkraft nachgiebig oder verstellbar oder beweglich gelagert und mit einer Wiegeeinrichtung versehen oder verbunden oder in Wirkverbindung sind, **dadurch gekennzeichnet, dass** oberhalb der Unterseite der Bodenabstützung (3) Abstützvorsprünge (4) vorgesehen sind, die mit der Wiegeeinrichtung in Wirkverbindung sind und die die Aufnahme (5) für das Gefäß (10) als Unterstützung oder als an der Unterseite der Aufnahme (5) angeordnete Abstützvorsprünge (4) tragen, wobei die Abstützvorsprünge (4) bewegbare Hebel (7) oder Wippen oder Endstücke haben oder beaufschlagen, die mit der Wiegeeinrichtung zusammenwirken oder in Wirkverbindung oder verbunden sind.

2. Labor-Stativ nach Anspruch 1, **dadurch gekennzeichnet, dass** alle Abstützvorsprünge (4) als unterseitig an der Bodenabstützung (3) angeordnete Abstützvorsprünge (4) ausgebildet und mit der Wiegeeinrichtung in Wirkverbindung sind.

3. Labor-Stativ nach Anspruch 1 oder 2, **dadurch gekennzeichnet, dass** oberhalb der Unterseite der Bodenabstützung (3) nach oben gerichtete Abstützvorsprünge (4) vorgesehen sind, die nach unten oder in vertikaler Richtung abwärts gegen eine Rückstellkraft oder Federkraft nachgiebig oder verstellbar oder beweglich gelagert und mit einer Wiegeeinrichtung versehen oder verbunden oder in Wirkverbindung sind und die - vorzugsweise plattenförmige - Aufnahme (5) für das Gefäß (10) in Gebrauchsstellung von unten her unterstützen und tragen.

4. Labor-Stativ nach einem der Ansprüche 1 bis 3, **dadurch gekennzeichnet, dass** die Bodenabstützung (3) zueinander beabstandete Arme (11) aufweist, die in einen an ihr vorbesehenen Zwischenraum ragende und federnd schwenkbare Haltearme (13) mit in Gebrauchsstellung nach oben weisenden Abstützvorsprüngen (4) tragen, und dass auf den Abstützvorsprüngen wenigstens eine - insbesondere plattenförmige - Aufnahme (5) mit einer oberen Aufstellfläche (6) für wenigstens ein Gefäß (10) vorgesehen ist.

5. Labor-Stativ nach einem der Ansprüche 1 bis 4, **dadurch gekennzeichnet, dass** die Bodenabstützung (3) einen Zwischenraum zwischen zwei - insbesondere parallelen - Armen (11) und an diesen Armen (11) in den Zwischenraum oder dessen Projektion ragende Vorsprünge (14) aufweist, auf welchen in Gebrauchsstellung die die Aufstellfläche (6) aufnehmende Aufnahme (5) aufgelagert ist, und dass die Aufnahme (5) unterseitig mit den Vorsprüngen (14) in Gebrauchsstellung in Berührkontakt befindliche Abstützvorsprünge (4) aufweist, die aufwärts oder in vertikaler Richtung gegen eine Rückstell- oder Federkraft an der Aufnahme (5) nachgiebig oder verstellbar oder beweglich gelagert und mit der Wiegeeinrichtung versehen oder verbunden oder in Wirkverbindung sind.

6. Labor-Stativ nach einem der Ansprüche 1 bis 5, **dadurch gekennzeichnet, dass** die an der Unterseite der Aufnahme (5) befindlichen, mit einer Wiegeeinrichtung verbundenen oder in Wirkverbindung befindlichen Abstützvorsprünge (4) auf die Bodenabstützung (3) oder die diese bildenden Arme (11) passen und darauf aufstellbar sind.

7. Labor-Stativ nach einem der Ansprüche 1 bis 6, **dadurch gekennzeichnet, dass** die Bodenabstützung (3) selbst die Aufstellfläche (6) der Aufnahme (5) aufweist oder bildet oder trägt.

8. Labor-Stativ nach einem der Ansprüche 1 bis 7, **dadurch gekennzeichnet, dass** die an der Bodenabstützung (3) vorgesehene Aufnahme (5) für das Gefäß (10) eine durchgängige Aufstellfläche (6) bildet, welche plattenförmig ausgebildet ist und unterseitig die nachgiebigen Abstützvorsprünge (4) sowie an der Oberseite die Aufstellfläche (6) aufweist, oder dass die Bodenabstützung (3) von einen Zwischenraum zwischen sich aufnehmenden Armen (11) gebildet ist, und zu dem Labor-Stativ (1) ein Gefäß (10) gehört, dessen Bodenfläche zumindest in einer Richtung eine größere Abmessung hat, als es dem inneren Abstand der Arme (11) entspricht, wobei die Haltestange vorzugsweise exzentrisch zu der Bodenabstützung (3) und/oder zu der Gefäß-Aufnahme (5) angeordnet ist.

9. Labor-Stativ nach einem der Ansprüche 1 bis 8, **dadurch gekennzeichnet, dass** ein Teil der beweglichen Lagerung des/der Abstützvorsprünge (4) mit der Wiegeeinrichtung in Wirkverbindung ist.

10. Labor-Stativ nach einem der Ansprüche 1 bis 9, **dadurch gekennzeichnet, dass** der/die Abstützvorsprünge (4) wenigstens teilweise aus federelastisch nachgiebigem Werkstoff besteht/bestehen und/oder mit einem mit der Wiegeeinrichtung verbundenen, durch die Nachgiebigkeit des/der Abstützvorsprünge (4) bewegbaren Übertragungselement zu der Wiegeeinrichtung versehen ist/sind.

11. Labor-Stativ nach einem der Ansprüche 1 bis 10, **dadurch gekennzeichnet, dass** die durch die Abstützvorsprünge (4) bewegbaren Hebel (7) oder Wippen oder Endstücke mit Kraftmesssensoren oder Messstreifen oder Piezoelementen als Bestandteile einer Wiegeeinrichtung versehen sind.

12. Labor-Stativ nach einem der Ansprüche 1 bis 11, **dadurch gekennzeichnet, dass** die Kraftmesssensoren mehrerer oder aller Abstützvorsprünge (4) mit einem Mikroprozessor oder Rechner in der Weise kombiniert sind, dass die an den einzelnen Abstützvorsprüngen (4) aufgenommenen Gewichtskräfte addiert und/oder gemittelt werden.

13. Labor-Stativ nach einem der Ansprüche 1 bis 12, **dadurch gekennzeichnet, dass** es einen elektronischen Speicher für Rezepturen aufweist, in welchem stoffmäßig und/oder gewichtsmäßig definierte Einzelbestandteile von Mischungen hinterlegt sind und durch die integrierte Wiegefunktion menügeführt abarbeitbar sind.

14. Labor-Stativ nach einem der Ansprüche 1 bis 13, **dadurch gekennzeichnet, dass** es an der Bodenabstützung (3) oder Gefäßaufnahme (5) oder Haltestange (2) wenigstens eine Gewichtsanzeige (12) aufweist.

15. Labor-Stativ nach einem der Ansprüche 1 bis 14, **dadurch gekennzeichnet, dass** die mit den Abstützvorsprüngen (4) zusammenwirkenden Wiegeeinrichtung oder Wiegesensoren zur Weitergabe der Messergebnisse über Funk insbesondere an ein in dem Labor-Stativ (1) angeordnetes Gerät, dessen Antrieb und/oder ein zu ihm gehörendes Display (12) oder dergleichen Anzeige ausgebildet ist/sind.

## Claims

1. Laboratory stand (1) with a weighing device, with at least one upwardly directed holding bar (2), and with a base support (3) supporting this holding bar (2), and also with a seat (5) for at least one vessel (10) or laboratory vessel, wherein the base support (3) has the seat (5) for the vessel (10), and wherein at least one bracket for a mixing and/or stirring and/or dispersing and/or temperature-regulating and/or measuring device can be mounted on or is provided on the holding bar (2) in particular in a releasable and/or height-adjustable manner, wherein the seat (5) provided on the base support (3) forms a set-down surface (6) for receiving, holding and/or supporting the vessel (10) in a position of use, and wherein support projections (4) are provided or arranged on the underside of the seat (5) facing away from the set-down surface (6), which support projections (4) are resiliently or adjustably or movably mounted transversely with respect to the set-down surface (6) and its underside or in a vertical direction against a restoring force or spring force and are provided with or connected to or in operative connection with a weighing device, **characterized in that**, above the underside of the base support (3), support projections (4) are provided which are in operative connection with the weighing device and which support the seat (5) for the vessel (10) as a support or as support projections (4) arranged on the underside of the seat (5), wherein the support projections (4) have or act on movable levers (7) or rockers or endpieces which interact with or are in operative connection with or connected to the weighing device.

2. Laboratory stand according to Claim 1, **characterized in that** all of the support projections (4) are designed as support projections (4) arranged on the underside of the base support (3) and are in operative connection with the weighing device.

3. Laboratory stand according to Claim 1 or 2, **characterized in that**, above the underside of the base support (3), upwardly directed support projections (4) are provided which are resiliently or adjustably or movably mounted downwards or in a downward vertical direction against a restoring force or spring force and are provided with or connected to or in operative connection with a weighing device, and which support and carry the preferably plate-shaped seat (5) for the vessel (10) from underneath in the position of use.

4. Laboratory stand according to one of Claims 1 to 3, **characterized in that** the base support (3) has mutually spaced-apart arms (11) which carry resiliently pivotable holding arms (13) protruding into a gap provided on the base support, with support projections (4) pointing upwards in the position of use, and **in that** at least one in particular plate-shaped seat (5), with an upper set-down surface (6) for at least one vessel (10), is provided on the support projections.

5. Laboratory stand according to one of Claims 1 to 4, **characterized in that** the base support (3) has a gap between two in particular parallel arms (11) and has, on these arms (11), projections (14) which protrude into the gap or the projection of the latter, and on which, in the position of use, the seat (5) receiving the set-down surface (6) is mounted, and **in that** the seat (5) has, on the underside, support projections (4) which in the position of use are in touching contact with the projections (14), which support projections (4) are resiliently or adjustably or movably mounted upwards or in a vertical direction against a restoring force or spring force and are provided with or connected to or in operative connection with the weighing device.

6. Laboratory stand according to one of Claims 1 to 5, **characterized in that** the support projections (4) located on the underside of the seat (5), and connected to or in operative connection with a weighing device, fit onto and can be placed on the base support (3) or the arms (11) forming the latter.

7. Laboratory stand according to one of Claims 1 to 6, **characterized in that** the base support (3) itself has or forms or carries the set-down surface (6) of the seat (5).

8. Laboratory stand according to one of Claims 1 to 7, **characterized in that** the seat (5) for the vessel (10), provided on the base support (3), forms a continuous set-down surface (6), which has a plate-shaped design and on the underside has the resilient support projections (4) and on the top side has the set-down surface (6), or **in that** the base support (3) is formed of arms (11) having a gap between them, and the laboratory stand (1) is assigned a vessel (10) whose bottom surface has, at least in one direction, a dimension greater than the inner distance between the arms (11), wherein the holding bar is preferably arranged eccentrically to the base support (3) and/or to the vessel seat (5).

9. Laboratory stand according to one of Claims 1 to 8, **characterized in that** a part of the movable mounting of the one or more support projections (4) is in operative connection with the weighing device.

10. Laboratory stand according to one of Claims 1 to 9, **characterized in that** the one or more support projections (4) are made at least partially of resiliently elastic material and/or are provided with a transmission element to the weighing device, which transmission element is connected to the weighing device and is movable on account of the resilience of the one or more support projections (4) .

11. Laboratory stand according to one of Claims 1 to 10, **characterized in that** the levers (7) or rockers or endpieces movable by the support projections (4) are provided with force-measuring sensors or measuring strips or piezo elements as constituent parts of a weighing device.

12. Laboratory stand according to one of Claims 1 to 11, **characterized in that** the force-measuring sensors of several or all of the support projections (4) are combined with a microprocessor or computer in such a way that the weights recorded at the individual support projections (4) are added and/or averaged.

13. Laboratory stand according to one of Claims 1 to 12, **characterized in that** it has an electronic memory for formulations, in which individual constituents, defined in terms of substance and weight, of mixtures are stored and are able to be processed in a menu-driven manner by the integrated weighing function.

14. Laboratory stand according to one of Claims 1 to 13, **characterized in that** it has at least one weight indicator (12) on the base support (3) or vessel seat (5) or holding bar (2).

15. Laboratory stand according to one of Claims 1 to 14, **characterized in that** the weighing device or weighing sensors interacting with the support projections (4) are designed to forward the measurement results by radio in particular to an appliance arranged in the laboratory stand (1), to its drive, and/or to a display (12) associated therewith, or to a similar indicator.

## Revendications

1. Statif de laboratoire (1) pourvu d'un dispositif de pesage, d'au moins une tige de support (2) qui est orientée vers le haut et d'un élément d'appui au sol (3) qui supporte ladite tige de support (2) ainsi que d'un logement (5) pour au moins un récipient (10) ou un récipient de laboratoire, dans lequel l'élément d'appui au sol (3) comprend le logement (5) pour le récipient (10) et dans lequel au moins un support pour un dispositif de mélange et/ou d'agitation et/ou de dispersion et/ou de régulation de température et/ou de mesure peut être monté ou est prévu sur la tige de support (2), en particulier de façon amovible et/ou réglable en hauteur, dans lequel le logement (5) prévu sur l'élément d'appui au sol (3) forme une surface de pose (6) qui reçoit, retient et/ou soutient le récipient (10) qui se trouve dans la position d'utilisation, et dans lequel des parties de support en saillie (4) sont prévues ou sont agencées sur la face inférieure du logement (5) qui est opposée à la surface de pose (6), lesdites parties étant montées de manière flexible ou réglable ou mobile transversalement à la surface de pose (6) et à sa face inférieure ou verticalement à l'encontre d'une force de rappel ou d'un ressort et étant pourvues d'un dispositif de pesage ou étant reliées à celui-ci ou encore se trouvant en liaison active avec celui-ci, **caractérisé en ce que** des parties de support en saillie (4) sont prévues au-dessus de la face inférieure de l'élément d'appui au sol (3), lesdites parties se trouvant en liaison active avec le dispositif de pesage et supportant le logement (5) pour le récipient (10) en tant que support ou en tant que parties de support en saillie (4) qui sont agencées sur la face inférieure du logement (5), les parties de support en saillie (4) présentant ou sollicitant des leviers (7) ou des bascules ou des embouts mobiles qui coopèrent avec le dispositif de pesage ou qui se trouvent en liaison active avec celui-ci ou qui sont reliées à celui-ci.

2. Statif de laboratoire selon la revendication 1, **caractérisé en ce que** la totalité des parties de support en saillie (4) se présentent sous la forme de parties de support en saillie (4) qui sont agencées sur la face inférieure de l'élément d'appui au sol (3) et qui se trouvent en liaison active avec le dispositif de pesage.

3. Statif de laboratoire selon la revendication 1 ou 2, **caractérisé en ce que** des parties de support en saillie (4) qui sont orientées vers le haut sont prévues au-dessus de la face inférieure de l'élément d'appui au sol (3), lesdites parties étant montées de manière flexible ou réglable ou mobile vers le bas ou dans la direction verticale vers le bas à l'encontre d'une force de rappel ou d'une force élastique et étant pourvues d'un dispositif de pesage ou étant reliées à celui-ci ou encore se trouvant en liaison active avec celui-ci et soutenant et supportant par le bas le logement (5), de préférence en forme de plaque, pour le récipient (10) qui se trouve dans la position d'utilisation.

4. Statif de laboratoire selon l'une quelconque des revendications 1 à 3, **caractérisé en ce que** l'élément d'appui au sol (3) présente des bras (11) situés à distance les uns des autres, lesdits bras supportant des bras de retenue (13) qui font saillie à l'intérieur d'un espace intermédiaire prévu sur celui-ci et pouvant pivoter de façon élastique avec les parties de support en saillie (4) pointant vers le haut qui se trouvent dans la position d'utilisation, et **en ce qu'**il est prévu sur les parties de support en saillie au moins un logement (5), en particulier en forme de plaque, qui présente une surface de pose supérieure (6) pour au moins un récipient (10).

5. Statif de laboratoire selon l'une quelconque des revendications 1 à 4, **caractérisé en ce que** l'élément d'appui au sol (3) présente un espace intermédiaire entre deux bras (11), en particulier parallèles, ainsi que des protubérances en saillie (14) sur ces bras (11) à l'intérieur de l'espace intermédiaire ou de la projection de celui-ci, protubérances sur lesquelles est posé, dans la position d'utilisation, le logement (5) qui reçoit la surface de pose (6), et **en ce que** le logement (5) présente sur sa face inférieure des parties de support en saillie (4) qui sont en contact avec les protubérances (14) qui se trouvent dans la position d'utilisation, lesdites parties étant montées sur le logement (5) de manière flexible ou réglable ou mobile vers le haut ou dans la direction verticale à l'encontre d'une force de rappel ou d'une force élastique et étant pourvues d'un dispositif de pesage ou étant reliées à celui-ci ou encore se trouvant en liaison active avec celui-ci.

6. Statif de laboratoire selon l'une quelconque des revendications 1 à 5, **caractérisé en ce que** les parties de support en saillie (4) qui se trouvent sur la face inférieure du logement (5) et qui sont reliées à un dispositif de pesage ou qui se trouvent en liaison active avec celui-ci s'adaptent sur l'élément d'appui au sol (3) ou sur les bras (11) formant celui-ci et peuvent être placées au-dessus de celui-ci ou de ceux-ci.

7. Statif de laboratoire selon l'une quelconque des revendications 1 à 6, **caractérisé en ce que** l'élément d'appui au sol (3) présente ou forme ou porte lui-même la surface de pose (6) du logement (5).

8. Statif de laboratoire selon l'une quelconque des revendications 1 à 7, **caractérisé en ce que** le logement (5) qui est prévu sur l'élément d'appui au sol (3) pour le récipient (10) forme une surface de pose continue (6) qui se présente sous la forme d'une plaque et qui comporte les parties de support en saillie flexibles (4) sur sa face inférieure ainsi que la surface de pose (6) sur sa face supérieure, ou **en ce que** l'élément d'appui au sol (3) est formé par un espace intermédiaire qui supporte les bras (11), et le statif de laboratoire (1) comprend un récipient (10) dont la surface inférieure présente, au moins dans une direction, une dimension supérieure à celle qui correspond à l'écartement interne des bras (11), la tige de support étant de préférence agencée de manière excentrique par rapport à l'élément d'appui au sol (3) et/ou par rapport au logement du récipient (5).

9. Statif de laboratoire selon l'une quelconque des revendications 1 à 8, **caractérisé en ce qu'**une partie du logement mobile de la partie ou des parties de support en saillie (4) se trouve en liaison active avec le dispositif de pesage.

10. Statif de laboratoire selon l'une quelconque des revendications 1 à 9, **caractérisé en ce que** la partie ou les parties de support en saillie (4) est constituée ou sont constituées au moins partiellement en un matériau élastiquement déformable et/ou est pourvue ou sont pourvues d'un élément de transmission en direction du dispositif de pesage qui est relié au dispositif de pesage et qui est déplaçable par l'intermédiaire de la flexibilité de la partie ou des parties de support en saillie (4).

11. Statif de laboratoire selon l'une quelconque des revendications 1 à 10, **caractérisé en ce que** les leviers (7) ou les bascules ou les embouts déplaçables par les parties de support en saillie (4) sont pourvu(e)s de capteurs de force ou de jauges de mesure ou d'éléments piézoélectriques en tant que composants d'un dispositif de pesage.

12. Statif de laboratoire selon l'une quelconque des revendications 1 à 11, **caractérisé en ce que** les capteurs dynamométriques de plusieurs ou de la totalité des parties de support en saillie (4) sont combinés à un microprocesseur ou à un ordinateur de telle sorte que les forces pondérales enregistrées sur les parties de support en saillie individuelles (4) soient additionnées et/ou soient pondérées.

13. Statif de laboratoire selon l'une quelconque des revendications 1 à 12, **caractérisé en ce qu'**il incorpore une mémoire électronique pour les formulations, mémoire à l'intérieur de laquelle sont enregistrés des composants individuels de mélanges définis en termes de matière et/ou de poids et dans laquelle la fonction de pesage intégrée permet d'effectuer un traitement de manière guidée par un menu.

14. Statif de laboratoire selon l'une quelconque des revendications 1 à 13, **caractérisé en ce qu'**il présente au moins un indicateur de poids (12) sur l'élément d'appui au sol (3) ou sur le logement (5) ou sur la tige de support (2).

15. Statif de laboratoire selon l'une quelconque des revendications 1 à 14, **caractérisé en ce que** le dispositif de pesage ou les capteurs de pesage qui coopère(nt) avec les parties de support en saillie (4) pour transmettre les résultats de mesure par radio en particulier à un appareil agencé dans le statif de laboratoire (1), à son mécanisme d'entraînement et/ou à un écran de celui-ci (12), ou analogue, est prévu ou sont prévus.
